# EUROPÄISCHE PATENTSCHRIFT

(11) **EP 2 358 983 B1**
(45) Veröffentlichungstag und Bekanntmachung des Hinweises auf die Patenterteilung: **29.05.2013**
(21) Anmeldenummer: 09759697.7
(22) Anmeldetag: 05.11.2009
(51) Int. Cl.: F01N 9/00, F01N 11/00, F01N 3/022, F01N 3/023, F01N 3/027

(54) **VERFAHREN ZUR REGENERATION EINES OFFENEN PARTIKELABSCHEIDERS**
METHOD FOR REGENERATING AN OPEN PARTICLE SEPARATOR
PROCÉDÉ DE RÉGÉNÉRATION D'UN DISPOSITIF DE DÉPÔT DE PARTICULES OUVERT

(30) Priorität: 21.11.2008 DE 102008058418
(43) Veröffentlichungstag der Anmeldung: 24.08.2011
(73) Patentinhaber: Emitec Gesellschaft für Emissionstechnologie mbH, 53797 Lohmar (DE)
(72) Erfinder: HODGSON, Jan, 53840 Troisdorf (DE); BRÜCK, Rolf, 51429 Bergisch Gladbach (DE)
(74) Vertreter: Rössler, Matthias
(86) Internationale Anmeldenummer: PCT/EP2009/064657
(87) Internationale Veröffentlichungsnummer: WO 2010/057780

(56) Entgegenhaltungen:
- WO-A1-96/03571
- DE-A1- 10 301 035
- DE-C1- 3 729 857

## Beschreibung

Die vorliegende Erfindung betrifft ein Verfahren zur Regeneration eines offenen Partikelabscheiders.

Partikelabscheider werden zur Reinigung von Abgasen einer Verbrennungskraftmaschine eines Kraftfahrzeuges eingesetzt, vorzugsweise eines Diesel-Motors. Gerade in den letzten Jahren hat die Bedeutung von Partikelabscheidern zur Reinigung der Abgase von Diesel-Verbrennungskraftmaschinen wegen der Diskussion um Feinstaubbelastungen erheblich zugenommen. Die ersten, heute weit verbreiteten Partikelabscheider im Kraftfahrzeugbereich waren geschlossene Partikelfilter. Bei diesen, zumeist aus Keramik, teilweise aber auch aus Metall gefertigten Filtern, wird das zu reinigende Abgas zwangsweise durch ein Filtermaterial hindurchgeführt, in welchem enthaltene Ruß- oder Kohlenstoffpartikel ablagert werden. Diese werden durch hohe Abgastemperaturen sowie eventuell eine katalytisch wirkende Beschichtung des Filtermaterials im Partikelfilter thermisch umgesetzt, wobei die katalytische Beschichtung die zur Umsetzung erforderlichen Abgastemperaturen herabsetzt. Typischerweise sind Partikelfilter als Wabenkörper mit wechselseitig verschlossenen Kanälen ausgebildet. Abgas, das eingangsseitig durch einen Kanal in den Partikelfilter eintritt, muss also eine Kanalwand passieren, um auf der anderen Seite des Partikelfilters aus diesem wieder austreten zu können.

Ein Problem der geschlossenen Partikelfilter ist, dass diese bei unzureichendem Umsatz der in ihnen festgehaltenen Ruß- bzw. Kohlenstoffpartikel verstopfen. Dies tritt insbesondere bei niedrigen Abgastemperaturen auf. Gerade die Temperaturen der Abgase von typischen Diesel-Motoren sind häufig derart niedrig, dass auch durch eine geeignete katalytische Beschichtung des Partikelfilters keine Umsetzung der Kohlenstoffpartikel erreicht werden kann. Bei nicht regenerierten, verstopften Partikelfiltern stellt sich ein Druckgefälle über den Partikelfilter ein, welcher das Verhalten der Verbrennungskraftmaschine negativ beeinflusst und folglich unerwünscht ist. Aus diesem Grunde müssen Partikelfilter regeneriert werden. Dies geschieht meistens durch Erhöhung der Abgastemperatur. Dafür sind unterschiedliche Verfahren bekannt. Durch eine Veränderung des der Verbrennungskraftmaschine zugeführten Kraftstoff-Luft-Gemisches und/oder spezielle Einstellungen der Einspritz- oder Zündzeitpunkte der Verbrennungskraftmaschine kann die Abgastemperatur variiert werden. Alternativ oder kumulativ kann die Abgastemperatur auch im Abgassystem selbst z. B. durch Einspritzung von Kraftstoff oder Sauerstoff in die Abgasleitung und/oder durch elektrische Aufheizung des Abgases erhöht werden.

Als Alternative zu geschlossenen Partikelfiltern sind in den letzten Jahren offene Partikelabscheider entwickelt worden. Diese sind durchlässig, das heißt, dass durch den Partikelabscheider hindurch offene Strömungswege existieren, die auch von Partikeln passiert werden können. Die Durchlässigkeit offener Partikelabscheider wird im Allgemeinen anhand des Durchmessers der Partikel, vorzugsweise Kugeln, beschrieben, welche durch diesen hindurch rieseln können. In der EP 1 440 226 B1 gilt ein Partikelfilter insbesondere dann als offen, wenn Kugeln mit einem Durchmesser von mehr als 0,1 mm, vorzugsweise mehr als 0,2 mm und insbesondere mehr als 0,3 mm durch diesen hindurch rieseln können.

In den Kanälen der offenen Partikelabscheider sind gegebenenfalls auch verschiedenartige Umlenkelemente für die Strömung vorgesehen, welche diese auf integrierte Filteroberflächen umlenkt. Häufig sind abwechselnd glatte Filterlagen, beispielsweise aus metallischen Feinstdrähten und gewellte Metallfolien mit Umlenkflächen als Sekundärstruktur zu einem Wabenkörper gewickelt, gewunden oder gestapelt. Regelmäßig werden so turbulente Strömungen im Partikelabscheider erzeugt, die die Impaktion und/oder die Diffusion der Partikel im Partikelabscheider begünstigen.

Offene Partikelabscheider haben den Vorteil, dass auch bei vollständiger Beladung mit Partikeln weiterhin ein Passieren der Abgase durch den Partikelabscheider möglich ist. Der Partikelabscheider kann somit nicht verstopfen. Die Regeneration offener Partikelabscheider erfolgt häufig mit Hilfe einer katalytischen Beschichtung und von Stickstoffdioxiden, welche durch einen in Strömungsrichtung in der Abgasleitung vor dem Partikelabscheider vorgesehenen Oxidationskatalysator erzeugt werden. Man spricht vom CRT-Verfahren (*Continuous Regenerating Trap).*

Es hat sich allerdings herausgestellt, dass auch solche offenen Partikelabscheider, insbesondere bei niedriger Abgastemperatur, über die Zeit eine Beladung mit Kohlenstoff- bzw. Rußpartikeln erfahren, die gegebenenfalls die Funktionen unerwünscht beeinträchtigen.

Aus der DE 103 01 035 A1 ist bekannt, dass ein Partikelfilter in Abhängigkeit eines gemessenen Abgasgegendrucksignals regeneriert werden kann. Bei einem offenen Partikelabscheider kann jedoch der Rußbeladungszustand durch die Messung des Abgasgegendrucks nicht eindeutig ermittelt werden.

Die DE 37 29 857 C1 offenbart, dass ein Rußabscheider in Abhängigkeit von der Betriebszeit und von den jeweiligen Betriebszuständen, z. B. einer Verbrennungskraftmaschine, regeneriert werden kann.

Die WO 96/03571 beschreibt ein Verfahren zur Regeneration eines Partikelfilters, wobei einerseits ermittelt wird, über welchen Zeitraum des Betriebs keine Regeneration des Partikelfilters stattfindet und wobei andererseits der Druckaufbau vor dem Filter gemessen wird. Aus diesen Daten wird ein Regenerationszeitpunkt abgleitet.

Dementsprechend liegt der Erfindung die Aufgabe zugrunde, die mit Bezug auf den Stand der Technik angeführten Probleme zumindest teilweise zu lösen und insbesondere ein Verfahren zur ausreichenden Regeneration offener Partikelfilter zu offenbaren, welches besonders einfach durchzuführen ist. Darüber hinaus soll eine Vorrichtung zur Durchführung des erfindungsgemäßen Verfahrens vorgestellt werden.

Diese Aufgaben werden gelöst mit einem Verfahren gemäß den Merkmalen des Patentanspruchs 1. Weitere vorteilhafte Ausgestaltungen des Verfahrens sind in den abhängig formulierten Patentansprüchen angegeben. Die in den Patentansprüchen einzeln aufgeführten Merkmale sind in beliebiger, technologisch sinnvoller, Weise miteinander kombinierbar und können durch erläuternde Sachverhalte aus der Beschreibung ergänzt werden, wobei weitere Ausführungsvarianten der Erfmdung aufgezeigt werden.

Das erfindungsgemäße Verfahren zur Regeneration eines offenen Partikelabscheiders umfasst zumindest folgende Schritte:
a) Ermitteln mindestens eines Parameters als Kenngröße für die Regenerationsfähigkeit des offenen Partikelabscheiders;
b) Vergleichen des mindestens einen Parameters mit einem ersten Schwellwert;
c) Bestimmung mindestens eines Anteils von einem Vergleichszeitraum, zu dem der Parameter den ersten Schwellwert erreicht hat;
d) Vergleichen des Anteils mit einem ersten Mindestanteil, der einer Mindestregenerationszeit im Vergleichszeitraum entspricht; und
e) wenn der Anteil den ersten Mindestanteil nicht erreicht, Einleiten von Maßnahmen zur Beeinflussung des Parameters, so dass dieser wenigstens entsprechend dem ersten Mindestanteil liegt und der erste Schwellwert erreicht ist und/oder der offene Partikelabscheider regeneriert wird.

Dem erfindungsgemäßen Verfahren liegt die Erkenntnis zugrunde, dass eine vollständige Funktionsfähigkeit des offenen Partikelabscheiders sichergestellt ist, wenn zu einem bestimmten Anteil der Betriebszeit bestimmte Mindestbedingungen vorliegen, bei welchen sich der offene Partikelabscheider (auch als Nebenstrom-Tiefenfilter bezeichnet) ausreichend regeneriert. Beispielsweise ist die vollständige Funktionsfähigkeit eines typischen offenen Partikelabscheiders sichergestellt, wenn zu 40 % der Betriebszeit Temperaturen von über 250 °C vorliegen.

In Schritt a) wird deswegen zunächst ein Parameter ermittelt, der die aktuelle Regenerationsfähigkeit des offenen Partikelabscheiders widerspiegelt. Dies kann beispielsweise die im Partikelfilter vorliegende Temperatur sein.

In Schritt b) wird dieser Parameter nun mit einem ersten Schwellwert verglichen. Im Falle der Temperatur würde nun beispielsweise überprüft, ob diese größer oder kleiner als eine Vergleichstemperatur (beispielsweise 250 °C) ist.

In Schritt c) wird daraufhin kontrolliert, wie lange die in Schritt b) ermittelte Bedingung vorlag. Dies geschieht immer in einem Vergleichszeitraum. Dieser Vergleichszeitraum kann bedarfsgerecht definiert sein, möglicherweise die letzten 80 Minuten des Betriebes der Verbrennungskraftmaschine. Es wird dabei beispielsweise festgestellt, dass zu einem Anteil von 50 % der letzten 80 Betriebsminuten im Partikelabscheider Temperaturen von über 250 °C vorlagen.

In Schritt d) wird der in Schritt c) ermittelte Anteil nun mit einem ersten Mindestanteil an ausreichender Zeit für die Regeneration verglichen und dadurch festgestellt, ob die notwendigen Regenerationsbedingungen vorlagen. Im Falle von 50 % Anteil an den letzten 80 Betriebsminuten und einem geforderten Mindestanteil von 40 % wird beispielsweise festgestellt, dass ausreichend lange die geforderte Regenerationsfähigkeit vorlag und deswegen keine weiteren Maßnahmen eingeleitet werden müssen.

Wenn allerdings in Schritt d) festgestellt wurde, dass der geforderte erste Mindestanteil nicht erreicht worden ist, so werden in Schritt e) Maßnahmen zur Beeinflussung des Parameters eingeleitet. Ziel ist, dass der in Schritt d) geforderte erste Mindestanteil wieder erreicht wird. Im Falle der Temperatur als Parameter werden beispielsweise Aufheizmaßnahmen für den offenen Partikelabscheider eingeleitet.

"Parameter" als Kenngröße für die Regenerationsfähigkeit eines offenen Partikelabscheiders können beispielsweise die Temperaturen des Abgases und/oder des offenen Partikelabscheiders, Druckdifferenzen des Abgases im Abgassystem, Volumenströme des Abgases, Stickoxidkonzentrationen (NOₓ-Konzentration) oder gewichtete kombinierte Parameter sein. Entsprechendes gilt für Schwellwerte in Schritt b). Als Anteile und erste Mindestanteile in den Schritten c) und d) werden typischer Weise prozentuale Anteile des Vergleichszeitraumes verarbeitet. Es ist allerdings auch möglich, absolute Zeiten miteinander zu vergleichen.

Im Fall, dass die Temperatur im offenen Partikelabscheider als Parameter verwendet wird, kommen bei heute bekannten offenen Partikelabscheidern mit den üblichen katalytisch wirkenden Beschichtungen, sowie eventuell einem stromaufwärts im Abgassystem vorgesehenen Oxidationskatalysator (CRT-Verfahren), als erste Schwellwerte insbesondere Temperaturen zwischen 200 und 300 °C, bevorzugt ca. 250 °C, in Betracht. Als geforderte Mindestanteile, zu denen der Schwellwert erreicht sein soll, kommen insbesondere Zeitanteile an einem Vergleichszeitraum von 30 bis 50 %, bevorzugt ca. 40 %, in Betracht.

Die ausreichende Regeneration bekannter offener Partikelabscheider bei einer derartigen Wahl der Parameter, ersten Schwellwerte und Anteile wurde durch Versuche im Rahmen der Erfindung festgestellt. Bei zukünftigen offenen Partikelabscheidern müssen diese Werte an deren Regenerationsbedürftigkeit und Regenerationsfähigkeit gegebenenfalls angepasst werden.

Typische Vergleichszeiträume können z. B. von 5 Minuten bis zu 5 Stunden lang sein. Es sind nicht nur in ihrer Länge festgelegte Vergleichszeiträume denkbar. Beispielsweise auch möglich ist, dass im Rahmen des erfindungsgemäßen Verfahrens immer die gesamte Betriebszeit seit dem letzten Start der angeschlossenen Verbrennungskraftmaschine betrachtet wird. Es ist auch möglich, dass direkt nach dem Start die Betriebszeit seit dem letzen Starten als Vergleichszeitraum betrachtet wird und ab einer gewissen Laufzeit der Verbrennungskraftmaschine der Vergleichszeitraum auf eine festgelegte Länge eingestellt wird. Nach einer Regeneration des offenen Partikelabscheiders kann der Vergleichszeitraum wieder neu betrachtet werden.

Die in Schritt e) eingeleiteten Maßnahmen können zwei verschiedene Zielsetzungen aufweisen. Erste mögliche Zielsetzung ist, dass der Parameter derart beeinflusst wird, dass die in den Schritten b) und d) geforderten Bedingungen (Schwellwert für ersten Mindestanteil) erfüllt sind. Eine andere Wirkungsweise ist, dass durch eine kurzzeitige sehr starke Beeinflussung des Parameters eine sofortige Regeneration des offenen Partikelabscheiders erzielt wird. Es ist auch möglich, beide Varianten von Schritt e) bedarfsweise miteinander zu kombinieren.

Einer solchen kurzzeitigen Regeneration des offenen Partikelabscheiders während des betrachteten Vergleichszeitraums kann ein Korrekturintervall für den gemessenen Anteil am Vergleichzeitraum zugeordnet sein, mit welchem dieser zwischen Schritt c) und Schritt d) korrigiert wird, um weiterhin einen zuverlässigen Betrieb des erfindungsgemäßen Verfahrens sicherzustellen.

Die im Rahmen des Verfahrens offenbarten Schritte a) bis e) werden typischer Weise nach Art einer Schleife regelmäßig wiederholt durchgeführt.

Zusätzlich können im Rahmen des erfindungsgemäßen Verfahrens die Rohemissionen der Verbrennungskraftmaschinen überwacht werden. Hiermit ist insbesondere eine Überwachung des Schadstoffgehaltes (Partikelbeladung, Kohlenmonoxidgehalt und/oder NOₓ-Konzentration) der Abgase direkt am Austritt der Verbrennungskraftmaschine gemeint. Wenn dort beispielsweise festgestellt wird, dass die Partikelmenge im Abgas dort bereits akzeptabel ist, kann die Beeinflussung des Parameters in Schritt e) gegebenenfalls zeitweise ausgesetzt werden. Ebenso kann gegebenenfalls eine verzögerte Regeneration vorgenommen werden, wenn die NO₂-Konzentration aktuell relativ hoch ist.

Besonders vorteilhaft ist das erfindungsgemäße Verfahren, wenn der in Schritt a) ermittelte Parameter oder der in Schritt c) bestimmte Anteil zwischengespeichert wird. Gegebenenfalls können auch beide Werte zwischengespeichert werden. Dies kann in einer integrierten Schaltung erfolgen und erlaubt eine einfache Implementierung des in Schritt d) des Verfahrens notwendigen Vergleiches.

Besonders vorteilhaft ist das erfindungsgemäße Verfahren auch, wenn die Maßnahmen in Schritt e) den Parameter zumindest unter Zufuhr von elektrischer Energie, durch Einspritzung von Kohlenwasserstoffen oder durch Variation des Zündverhaltens einer Verbrennungskraftmaschine beeinflusst. Gegebenenfalls können die Maßnahmen auch beliebig miteinander kombiniert werden.

Im Fall der Temperatur als Parameter kann diese durch die beschriebenen Maßnahmen einfach erhöht werden. Beispielsweise kann eine elektrische Heizeinrichtung im Partikelabscheider selbst und/oder in Form eines vorgeschalteten Heizkatalysators die Temperatur einfach erhöhen. Alternativ kann die Einspritzung von Kohlenwasserstoff (Kraftstoff) entweder in der Abgasleitung oder in der angeschlossenen Verbrennungskraftmaschine über das reguläre Einspritzsystem stromaufwärts des offenen Partikelabscheiders erfolgen. Durch die Variation des Zündverhaltens der Verbrennungskraftmaschine kann erreicht werden, dass nicht verbrannte Kohlenwasserstoffe mit dem Abgas aus der Verbrennungskraftmaschine heraus in die Abgasanlage und damit in den offenen Partikelabscheider gelangen und in diesem oder in einem vorgelagerten Oxidationskatalysator exotherm umgesetzt werden und somit die gewünschte Reaktionswärme entsteht.

Generell können zur Beeinflussung des Parameters in Schritt e) auch Maßnahmen durchgeführt werden, die den Wirkungsgrad der angeschlossenen Verbrennungskraftmaschine absenken. Es kann beispielsweise eine zumindest teilweise Drosselung der Abgasströmung erfolgen. Auch eine Drosselung der Ansaugluft, welche der Verbrennungskraftmaschine zugeführt wird, eignet sich zur Beeinflussung des Parameters.

Das erfindungsgemäße Verfahren umfasst weiter, dass, wenn der Parameter in Schritt b) zusätzlich mit einem zweiten Schwellwert verglichen wird, weiter überprüft wird, ob der erste Schwellwert mit einer ersten Maßnahme zur Beeinflussung des Parameters erreicht werden kann und diese erste Maßnahme in Schritt e) nur in diesem Falle eingeleitet wird.

Hintergrund ist hier, dass es unwirtschaftlich sein kann, Maßnahmen zur Beeinflussung des Parameters einzuleiten, wenn dieser durch besagte Maßnahmen den zu erreichenden ersten Schwellwert nicht erreichen kann. Eine elektrische Heizeinrichtung ist beispielsweise in der Lage, die Temperatur des Abgases einer Verbrennungskraftmaschine um ca. 10 °C zu erhöhen. Wenn die aktuelle Temperatur im offenen Partikelabscheider mehr als 10 °C unterhalb der für die Regeneration erforderlichen Temperatur läge, wäre die Aufheizung mit Hilfe der beschriebenen elektrischen Heizeinrichtung nicht erfolgreich. Aus diesem Grund wird durch den Vergleich mit einem zweiten Schwellwert die Möglichkeit einer Maßnahme, das gewünschte Ziel zu erreichen, überprüft und die Maßnahme in Schritt e) nur dann eingeleitet, wenn dies bestätigt wurde.

Der in Schritt b) eingeführte zweite Schwellwert kann einem festgelegten Wert entsprechen. Im Falle eines ersten Schwellwertes von 250 °C und einer Fähigkeit einer elektrischen Heizeinrichtung, die Temperatur des Abgases um 10 °C zu erhöhen, läge dieser zweite Schwellwert bei 240 °C. Es ist aber auch möglich, den zweiten Schwellwert dynamisch zu definieren. Je nach Abgasmassenstrom kann die Fähigkeit zur Temperaturerhöhung einer Heizeinrichtung unterschiedlich sein. Dementsprechend kann der zweite Schwellwert beispielsweise von dem Abgasmassenstrom durch den Partikelabscheider abhängig gewählt sein.

In einer weiteren Variante des erfindungsgemäßen Verfahrens kann der Vergleich mit dem zweiten Schwellwert auch mit einem zusätzlichen Parameter erfolgen, um so festzustellen, ob eine Einleitung von Maßnahmen in Schritt e) sinnvoll ist. Beispielsweise kann die NOₓ-Konzentration des Abgases überwacht werden. Wenn dann festgestellt wird, dass die NOₓ-Konzentration des Abgases zur Regeneration des offenen Partikelfilters nicht ausreichend ist, sollten in Schritt e) keine energieintensiven Maßnahmen zur Beeinflussung des Parameters eingeleitet werden.

Auch vorteilhaft ist es, wenn in Schritt e) eine zweite Maßnahme zur Beeinflussung des Parameters eingeleitet wird, wenn in Schritt b) festgestellt wurde, dass der erste Schwellwert mit der ersten Maßnahme zur Beeinflussung des Parameters nicht erreicht werden kann.

Wenn beispielsweise festgestellt wurde, dass eine elektrische Heizeinrichtung nicht in der Lage ist, die gewünschte Temperatur im offenen Partikelabscheider zu erreichen, kann eine andere und/oder zusätzliche Maßnahme zur Erhöhung der Abgastemperatur eingeleitet werden. Hier bieten sich insbesondere Maßnahmen an, die die Einspritzung von Kohlenwasserstoffen umfassen, weil durch diese typischer Weise große Temperaturerhöhungen im Abgas erzielt werden können.

Auch vorteilhaft ist es, wenn in Schritt d) zusätzlich ein Vergleich mit einem zweiten Mindestanteil durchgeführt wird und dadurch bestimmt wird, dass der erste Mindestanteil bald nicht erreicht werden könnte und in diesem Fall in Schritt e) bereits Maßnahmen zur Beeinflussung des Parameters eingeleitet werden, bevor der erste Mindestanteil nicht erreicht wurde.

Wenn als erster Mindestanteil beispielsweise definiert ist, dass der erste Schwellwert zu mindestens 40 % erreicht werden soll, kann mit Hilfe eines zweiten Mindestanteils von beispielsweise 45 % überprüft werden, ob der geforderte erste Mindestanteil von beispielsweise 40 % zum Beispiel unter Berücksichtigung der aktuellen Last der Verbrennungskraftmaschine eventuell bald unterschritten werden könnte. Es bietet sich an, in diesem Fall in Schritt e) bereits bei Unterschreitung des zweiten Mindestanteils Maßnahmen zur Beeinflussung des Parameters einzuleiten, um zu vermeiden, dass der erste Mindestanteil überhaupt unterschritten wird. Auch können auf diese Art und Weise besonders effektive Möglichkeiten zur Beeinflussung des Parameters ausgenutzt werden, z. B. kann die Temperatur in einem offenen Partikelabscheider präventiv immer dann erhöht werden, wenn sie nur geringfügig unterhalb der geforderten Schwelltemperatur liegt.

Darüber hinaus ist im Rahmen der Erfindung ein Kraftfahrzeug angegeben, umfassend mindestens eine Verbrennungskraftmaschine, mindestens eine Abgasanlage, mindestens einen offenen Partikelabscheider sowie mindestens einen Sensor zur Ermittlung eines Parameters, mindestens ein Regenerationsmittel zur Beeinflussung des Parameters und mindestens eine Steuerung zur Verarbeitung der durch den Sensor ermittelten Daten und zur Regelung des mindestens einen Regenerationsmittels, wobei die Steuerung zur Durchführung des beschriebenen Verfahrens eingerichtet ist.

Bei dem Sensor kann es sich beispielsweise um einen Temperatursensor, einen Drucksensor oder um eine Lambda-Sonde handeln. Das Regenerationsmittel zur Beeinflussung des Parameters kann eine elektrische Heizvorrichtung aber auch eine Einspritzvorrichtung für Kohlenwasserstoffe in einer Abgasanlage sein. Die Steuerung ist typischer Weise als integrierte Schaltung ausgeführt.

So werden hier also insbesondere eine Vorrichtung und ein Verfahren zur Regeneration eines offenen Partikelabscheiders vorgeschlagen, wobei zumindest folgendes gilt:
a) Ermitteln mindestens eines Parameters (z. B. *Temperatur und*/*oder Stickstoffdioxid-Anteil im Abgas, etc.*) als Kenngröße für die Regenerationsfähigkeit *(Partikel-Konvertierungsvermögen unter aktuellen Umgebungsbedingungen*) des offenen Partikelabscheiders;
b) Vergleichen des mindestens einen Parameters mit einem ersten Schwellwert *(z. B. einer Grenztemperatur und*/*oder einem Stickoxid-Anteil im Abgas, etc.);*
c) Bestimmung mindestens eines Anteils von einem Vergleichszeitraum (*z. B. Zeitintervall seit Start der Verbrennungskraftmaschine und*/*oder Zeitintervall seit letzter Regeneration des Partikelabscheiders und*/*oder festgelegtes Zeitintervall ausgehend vom aktuellen Zeitpunkt, etc.*), zu dem der Parameter den ersten Schwellwert erreicht (*insbesondere unterschritten oder überschritten*) hat;
d) Vergleichen des Anteils mit einem ersten Mindestanteil, der einer Mindestregenerationszeit (*z. B. (zusammenhängender) Zeitintervall, in dem für die kontinuierliche Regeneration günstige Umgebungsbedingungen hinsichtlich wenigstens eines Parameters vorgelegen haben*) im Vergleichszeitraum entspricht; und
e) Einleiten von Maßnahmen zur Beeinflussung des Parameters (*z. B. Einbringen und*/*oder Erzeugen von Wärme in das Abgas, die Partikelfalle, etc. und*/*oder Ändern der Abgaszusammensetzung z. B. Anheben des Stickstoffdioxidanteils*), so dass dieser wenigstens entsprechend dem ersten Mindestanteil liegt und der erste Schwellwert erreicht ist (*also insbesondere Erhöhen des Anteils im Vergleichszeitraum*) und/oder der offene Partikelabscheider regeneriert (*z. B. indem der Druckabfall über den Partikelabscheider einen vorgegebenen Minimalwert erreicht*) wird.

Die Erfindung sowie das technische Umfeld werden nachfolgend anhand der Figuren näher erläutert. Es ist darauf hinzuweisen, dass die Figuren besonders bevorzugte Ausführungsvarianten der Erfindung verdeutlichen, auf die diese jedoch nicht beschränkt ist. In den Zeichnungen zeigen schematisch:
- Fig. 1:: ein Diagramm einer über die Zeit aufgetragenen Temperatur in einem offenen Partikelabscheider,
- Fig. 2:: ein Kraftfahrzeug mit einer Abgasanlage geeignet zur Durchführung des erfindungsgemäßen Verfahrens, und
- Fig. 3:: den Aufbau eines offenen Partikelabscheiders.

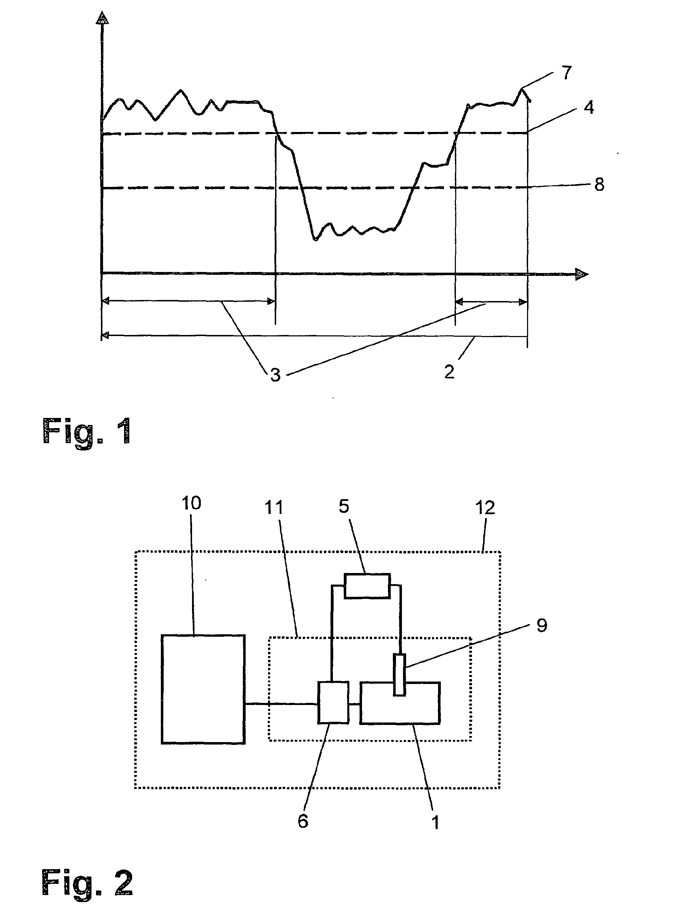

In dem in Fig. 1 dargestellten Diagramm zeigt die senkrechte Diagrammachse die Temperatur in einem offenen Partikelabscheider 1. Die waagerechte Diagrammachse spiegelt die Zeit wieder. Ein erster Schwellwert 4 und ein zweiter Schwellwert 8 sind als gestrichelte Linien in das Diagramm eingezeichnet. Erster Schwellwert 4 und zweiter Schwellwert 8 geben jeweils Grenztemperaturen an, deren Über- bzw. Unterschreitung protokolliert wird. Der Verlauf eines Parameters 7 über die Zeit ist in dem Diagramm aufgetragen. In einem Vergleichszeitraum 2 ist nun markiert, zu welchem Anteil 3 der Parameter 7 den ersten Schwellwert 4 erreicht. Eine Auswertung eines solchen Diagramms wird im erfindungsgemäßen Verfahren in den Schritten a) bis d) ausgeführt, um daraus abzuleiten, ob Maßnahmen zur Beeinflussung des Parameters 7 eingeleitet werden.

Fig. 2 zeigt ein Kraftfahrzeug 12 mit einer Verbrennungskraftmaschine 10 und einer Abgasanlage 11, die zur Durchführung des erfindungsgemäßen Verfahrens eingerichtet ist. Dazu weist die Abgasanlage 11 einen offenen Partikelabscheider 1 sowie ein Regenerationsmittel 6 zur Beeinflussung des Parameters 7, einen Sensor 9 und eine Steuerung 5 auf. Der Sensor 9 ist hier derart abgebildet, dass er den Parameter im offenen Partikelabscheider 1 misst. Alternativ ist es auch möglich, den Parameter 7 vor oder nach dem offenen Partikelabscheider 1 zu messen oder aber ihn aus verschiedenen anderen gemessenen Kenngrößen zu berechnen. Das Regenerationsmittel 6 ist hier in Strömungsrichtung des Abgases vor dem offenen Partikelabscheider 1 abgebildet.

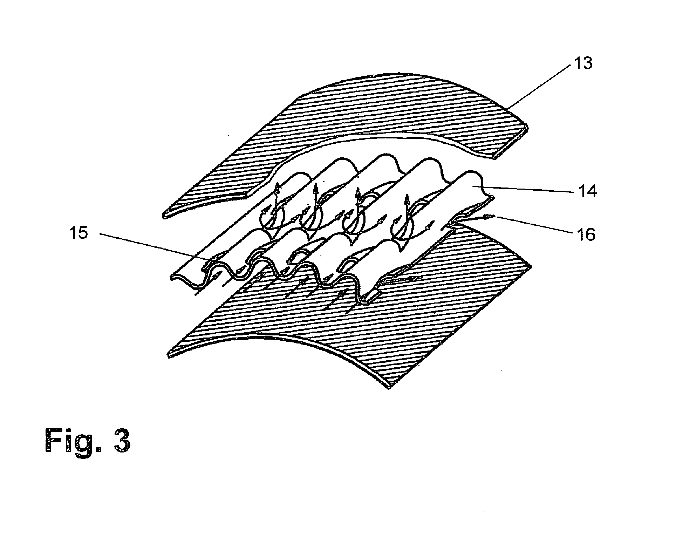

Fig. 3 veranschaulicht den Aufbau eines offenen Partikelabscheiders 1, der mit Hilfe des erfindungsgemäßen Verfahrens regeneriert werden kann. Ein solcher offener Partikelabscheider 1 besteht typischerweise aus gewellten Metallfolien 14 und aus Filterlagen 13. Gewellte Metallfolien 14 und Filterlagen 13 sind zu einem Wabenkörper mit für das Abgas passierbaren Kanälen gewickelt oder geschichtet. Die gewellten Metallfolien 14 weisen typischerweise Umlenkelemente 15 auf, welche dazu geeignet sind, die Abgasströmung 16 zumindest teilweise gegen die Filterlagen 13 zu lenken, ohne dabei die passierbaren Kanäle vollständig zu verschließen. Dabei können auch Turbulenzen in der Abgasströmung 16 entstehen. Enthaltene Partikel impaktieren in den Filterlagen 13. Dort werden sie thermisch, teilweise mit Hilfe einer katalytisch wirkenden Beschichtung des offenen Partikelabscheiders 1 und/oder unter Einsatz von Stickstoffdioxid, welches in einem vorgeschalteten Oxidationskatalysator generiert wird, umgesetzt. Detailliertere Beschreibungen offener Partikelabscheider finden sich beispielsweise in der DE 201 17 873 U1 oder der WO 2004/050219 A1, die hier (einzeln oder zusammen) zur Präzisierung und Erläuterung ergänzend herangezogen werden können. Solche offenen Partikelabscheider werden gelegentlich auch "Nebenstromfilter" genannt.

Das erfindungsgemäße Verfahren zur Regeneration offener Partikelabscheider ist besonders einfach und zuverlässig durchführbar und ermöglicht eine Kombination aus hoher Abgasreinigungszuverlässigkeit und einheitlichen Betriebsbedingungen für die Verbrennungskraftmaschine, da einerseits ein funktionsfähiger, aufnahmefähiger Partikelabscheider sichergestellt wird und andererseits ein Verstopfen des Partikelabscheiders nicht möglich ist.

### Bezugszeichenliste

| | |
|---|---|
| 1 | offener Partikelabscheider |
| 2 | Vergleichszeitraum |
| 3 | Anteil |
| 4 | erster Schwellwert |
| 5 | Steuerung |
| 6 | Regenerationsmittel |
| 7 | Parameter |
| 8 | zweiter Schwellwert |
| 9 | Sensor |
| 10 | Verbrennungskraftmaschine |
| 11 | Abgasanlage |
| 12 | Kraftfahrzeug |
| 13 | Filterlage |
| 14 | gewellte Metallfolien |
| 15 | Umlenkelemente |
| 16 | Abgasströmung |

## Patentansprüche

1. Verfahren zur Regeneration eines offenen Partikelabscheiders (1), umfassend zumindest folgende Schritte:
a) Ermitteln mindestens eines Parameters (7) als Kenngröße für die Regenerationsfähigkeit des offenen Partikelabscheiders (1);
b) Vergleichen des mindestens einen Parameters (7) mit einem ersten Schwellwert (4);
c) Bestimmung mindestens eines Anteils (3) von einem Vergleichszeitraum (2), zu dem der Parameter (7) den ersten Schwellwert (4) erreicht hat;
d) Vergleichen des Anteils (3) mit einem ersten Mindestanteil, der einer Mindestregenerationszeit im Vergleichszeitraum (2) entspricht; und,
e) wenn der Anteil (3) den ersten Mindestanteil nicht erreicht, Einleiten von Maßnahmen zur Beeinflussung des Parameters (7), so dass dieser wenigstens entsprechend dem ersten Mindestanteil liegt und der erste Schwellwert (4) erreicht ist und/oder der offene Partikelabscheider (1) regeneriert wird;
wobei in Schritt b) der Parameter zusätzlich mit einem zweiten Schwellwert (8) verglichen wird ... und durch diesen Vergleich überprüft wird, ob der erste Schwellwert (4) mit einer ersten Maßnahme zur Beeinflussung des Parameters (7) erreicht werden kann und diese in Schritt e) nur in diesem Fall eingeleitet werden.

2. Verfahren nach Patentanspruch 1, wobei der in Schritt a) ermittelte Parameter (7) und/oder der in Schritt c) bestimmte Anteil (3) zwischengespeichert wird.

3. Verfahren nach Patentanspruch 1 oder 2, wobei die Maßnahmen in Schritt e) den Parameter (7), zumindest unter Zufuhr von elektrischer Energie, durch Einspritzung von Kohlenwasserstoffen oder durch Variation des Zündverhaltens einer Verbrennungskraftmaschine (10) beeinflussen.

4. Verfahren nach einem der vorhergehenden Patentansprüche-4, wobei in Schritt e) eine zweite Maßnahme zur Beeinflussung des Parameters (7) eingeleitet wird, wenn in Schritt b) festgestellt wurde, dass der erste Schwellwert (4) mit der ersten Maßnahme zur Beeinflussung des Parameters (7) nicht erreicht werden kann.

5. Verfahren nach Patentanspruch 4, wobei in Schritt d) zusätzlich ein Vergleich mit einem zweiten Mindestanteil durchgeführt wird und dadurch bestimmt wird, dass der erste Mindestanteil bald nicht erreicht werden könnte und in diesem Falle in Schritt e) bereits Maßnahmen zur Beeinflussung des Parameters (7) eingeleitet werden, bevor der erste Mindestanteil nicht erreicht wurde.

6. Kraftfahrzeug (12), umfassend mindestens eine Verbrennungskraftmaschine (10), mindestens eine Abgasanlage (11), mindestens einen offenen Partikelabscheider (1) sowie mindestens einen Sensor (9) zur Ermittlung eines Parameters (7), mindestens ein Regenerationsmittel (6) zur Beeinflussung des Parameters (7) und mindestens eine Steuerung (5) zur Verarbeitung der durch den Sensor (9) ermittelten Daten und zur Regelung des mindestens einen Regenerationsmittels (6), wobei die Steuerung (5) zur Durchführung des Verfahrens nach einem der vorhergehenden Patentansprüche eingerichtet ist.

## Claims

1. Method for regenerating an open particle separator (1), comprising at least the following steps:
a) determining at least one parameter (7) as a characteristic variable for the regeneration capability of the open particle separator (1);
b) comparing the at least one parameter (7) with a first threshold value (4);
c) determining at least one proportion (3), during which the parameter (7) has reached the first threshold value (4), of a comparison period (2);
d) comparing the proportion (3) with a first minimum proportion which corresponds to a minimum regeneration time in the comparison period (2); and
e) if the proportion (3) does not reach the first minimum proportion, initiating measures for influencing the parameter (7) such that said parameter lies at least correspondingly to the first minimum proportion and the first threshold value (4) is reached and/or the open particle separator (1) is regenerated;
wherein in step b) the parameter is additionally compared with a second threshold value (8), and by this comparison it is checked whether the first threshold value (4) can be reached by means of a first measure for influencing the parameter (7), and said first measure is initiated in step e) only if this is the case.

2. Method according to claim 1, wherein the parameter (7) determined in step a) and/or the proportion (3) determined in step c) is stored in a buffer.

3. Method according to claim 1 or 2, wherein the measures in step e) influence the parameter (7) at least by way of a supply of electrical energy, by means of an injection of hydrocarbons, or by variation of the ignition behavior of the internal combustion engine (10).

4. Method according to any of the preceding claims, wherein in step e) a second measure for influencing the parameter (7) is initiated if it has been established in step b) that the first threshold value (4) cannot be reached by means of the first measure for influencing the parameter (7).

5. Method according to claim 4, wherein in step d) a comparison with a second minimum proportion is additionally carried out, and it is thereby determined that the first minimum proportion soon could not be reached, and in this case, in step e), measures for influencing the parameter (7) are initiated already before the first minimum proportion has not been reached.

6. Motor vehicle (12) comprising at least one internal combustion engine (10), at least one exhaust system (11), at least one open particle separator (1) and at least one sensor (9) for determining a parameter (7), at least one regeneration means (6) for influencing the parameter (7) and at least one controller (5) for processing the data determined by the sensor (9) and for controlling the at least one regeneration means (6), wherein the controller (5) is constructed to carry out the method according to one of the preceding claims.

## Revendications

1. Procédé de régénération d'un séparateur ouvert (1) de particules, le procédé comportant au moins les étapes suivantes :
a) détermination d'au moins un paramètre (7) qui constitue une grandeur caractéristique de la capacité de régénération du séparateur ouvert (1) de particules,
b) comparaison du ou des paramètres (7) avec une première valeur de seuil (4),
c) détermination d'au moins une fraction (3) d'une durée de comparaison (2) pendant laquelle le paramètre (7) a atteint la première valeur de seuil (4),
d) comparaison de la fraction (3) avec une première fraction minimale qui correspond à une durée minimale de régénération dans la durée de comparaison (2) et
e) si la fraction (3) n'atteint pas la première fraction minimale, lancement de dispositions permettant d'agir sur le paramètre (7) de telle sorte que ce dernier corresponde au moins à la première fraction minimale, que la première valeur de seuil (4) soit atteinte et/ou que le séparateur ouvert (1) de particules soit régénéré,
le paramètre étant de plus comparé à l'étape b) avec une deuxième valeur de seuil (8) et cette comparaison permettant de vérifier si la première valeur de seuil (4) peut être atteinte en lançant une première disposition permettant d'agir sur le paramètre (7), cette disposition n'étant lancée à l'étape e) que dans ce cas.

2. Procédé selon la revendication 1, dans lequel le paramètre (7) déterminé à l'étape a) et/ou la fraction (3) définie à l'étape c) sont conservés temporairement en mémoire.

3. Procédé selon les revendications 1 ou 2, dans lequel les dispositions prises à l'étape e) agissent sur le paramètre (7) au moins par apport d'énergie électrique, par injection d'hydrocarbure ou par modification du comportement d'allumage d'une machine à combustion interne (10).

4. Procédé selon l'une des revendications précédentes, dans lequel à l'étape e), une deuxième disposition est lancée pour agir sur le paramètre (7) s'il a été constaté à l'étape b) que la première valeur de seuil (4) ne peut être atteinte avec la première disposition langée pour agir sur le paramètre (7).

5. Procédé selon la revendication 4, dans lequel à l'étape d), une comparaison avec une deuxième fraction minimale est lancée en supplément et permet de déterminer si la première fraction minimale n'a pas encore pu être atteinte et dans ce cas, des dispositions sont déjà lancées à l'étape e) en vue d'agir sur le paramètre (7) avant que la première fraction n'ait pas été atteinte.

6. Véhicule automobile (12) comprenant au moins un moteur à combustion interne (10), au moins une installation (11) de gaz d'échappement, au moins un séparateur ouvert (1) de particules, au moins une sonde (9) de détermination d'un paramètre (7), au moins un moyen de régénération (6) destiné à agir sur le paramètre (7) et au moins une commande (5) qui traite les données déterminées par la sonde (9) et qui régule le ou les moyens de régénération (6), la commande (5) étant conçue pour exécuter le procédé selon l'une des revendications précédentes.
